Europäisches Patentamt

European Patent Office

Office européen des brevets

(11) Numéro de publication : **0 356 389 B1**

# FASCICULE DE BREVET EUROPEEN

(45) Date de publication du fascicule du brevet :
16.09.92 Bulletin 92/38

(51) Int. Cl.⁵ : **B23B 31/20,** B23B 9/00,
B23Q 39/04

(21) Numéro de dépôt : 89810602.6

(22) Date de dépôt : 11.08.89

(54) **Dispositif d'entraînement destiné à une machine d'usinage multibroches.**

(30) Priorité : 16.08.88 CH 3066/88

(43) Date de publication de la demande :
28.02.90 Bulletin 90/09

(45) Mention de la délivrance du brevet :
16.09.92 Bulletin 92/38

(84) Etats contractants désignés :
CH DE FR GB IT LI

(56) Documents cités :
DE-A- 3 204 886
DE-B- 2 405 781
GB-A- 2 198 677

(73) Titulaire : **Tornos-Bechler SA Fabrique de
Machines Moutier
111 rue Industrielle
CH-2740 Moutier (Kanton-Bern) (CH)**

(72) Inventeur : **Simonin, Jean-Claude
Courtine 35
CH-2740 Moutier (CH)**

(74) Mandataire : **Rochat, Daniel Jean et al
Bovard SA Ingénieurs-Conseils ACP
Optingenstrasse 16
CH-3000 Bern 25 (CH)**

## Description

La présente invention répond à un besoin de perfectionnement et de nouveau développement sur les machines d'usinage multibroches. Jusqu'à maintenant, lorsqu'il s'agissait d'effectuer une opération d'indexage entre deux opérations d'usinage sur une barre ou une pièce portée par une broche qui se trouve dans une station d'usinage prédéterminée, on prévoyait, sur le support de barillet, un dispositif comportant un moteur auxiliaire, capable de venir en prise avec la broche que l'on désirait indexer, au moment où cet indexage était à réaliser et on prévoyait également des moyens pour découpler la broche de son arbre d'entraînement usuel, l'arrêter et la mettre en roue libre afin que le moteur auxiliaire puisse la faire tourner de l'angle désiré.

Le but de la présente invention est de réaliser un dispositif d'entraînement moins encombrant, plus simple et surtout d'un fonctionnement beaucoup plus souple, de sorte qu'il permet non seulement des indexages de broche mais également une série d'autres opérations qui augmentent la disponibilité des machines d'usinage multibroches.

Certaines machines d'usinage multibroches sont déjà équipées d'appareils auxiliaires qui comportent une pince susceptible de saisir une pièce dans une broche d'usinage, pour la transférer, en cours de cycle à une autre broche. Ainsi, le document DE-32 04 886 décrit une machine d'usinage avec un barillet indexable multibroches et deux ensembles frontaux de postes de travail disposés l'un devant et l'autre derrière le barillet. La pince de l'appareil auxiliaire peut saisir une pièce dans une broche du barillet orientée vers l'un des dits ensembles de postes de travail pour la transférer dans une broche orientée vers l'autre ensemble. Toutefois, cette pince n'est pas capable de soutenir la pièce alors qu'elle est entraînée en rotation.

D'autre part, des pinces à commande pneumatique sont déjà connues en soi, dans le domaine des machines d'usinage, notamment par les documents US-A-2,392,999 et GB-A-860,927.

Cependant, l'enseignement fourni par ces documents ne permet pas à l'homme du métier de résoudre le problème énoncé ci-dessus.

Une solution à ce problème réside, selon la présente invention, dans un dispositif d'entraînement et de commande d'une machine d'usinage multibroches comprenant elle-même, dans un bâti un barillet indexable autour d'un axe et équipé d'une série de broches réparties autour du dit axe et pourvues de moyens de rotation, un ensemble de postes de travail disposés en regard du barillet de manière à effectuer des opérations sur des barres ou pièces portées par les broches, et des moyens moteurs actionnant les postes de travail, le dit dispositif comprenant d'une part dans un des dits postes de travail une unité auxiliaire constituée d'une pince à ouverture et fermeture commandées et de moyens d'entraînement de la pince, raccordés aux dits moyens moteurs, et d'autre part des moyens de commande programmables connectés à la broche située en regard de la dite unité auxiliaire et à l'unité auxiliaire et capables de commander les dits moyens de rotation de la broche située en regard de l'unité auxiliaire et la pince, et d'effectuer ainsi au moins une opération d'indexage de la barre ou pièce portée par la dite broche, cette opération étant effectuée au moyen de la dite pince.

On va décrire ci-après, à titre d'exemple, une forme d'exécution de l'objet de l'invention en se référant au dessin annexé dont

la fig. 1 est une vue en élévation schématique montrant une machine d'usinage équipée du dispositif selon l'invention,

la fig. 2 est une vue partielle en coupe schématique montrant une forme d'exécution d'une unité autonome faisant partie du dispositif d'entraînement selon l'invention,

la fig. 3 est une vue en coupe axiale détaillée d'une pince faisant partie de l'unité autonome,

la fig. 4 est une vue en coupe selon la ligne IV-IV de la fig. 3,

la fig. 5 est une vue en élévation, également schématique et partielle, montrant l'exécution d'un travail en axe C sur une machine d'usinage équipée du dispositif selon l'invention, et

la fig. 6 est une vue partielle et schématique montrant un mécanisme de blocage de broche.

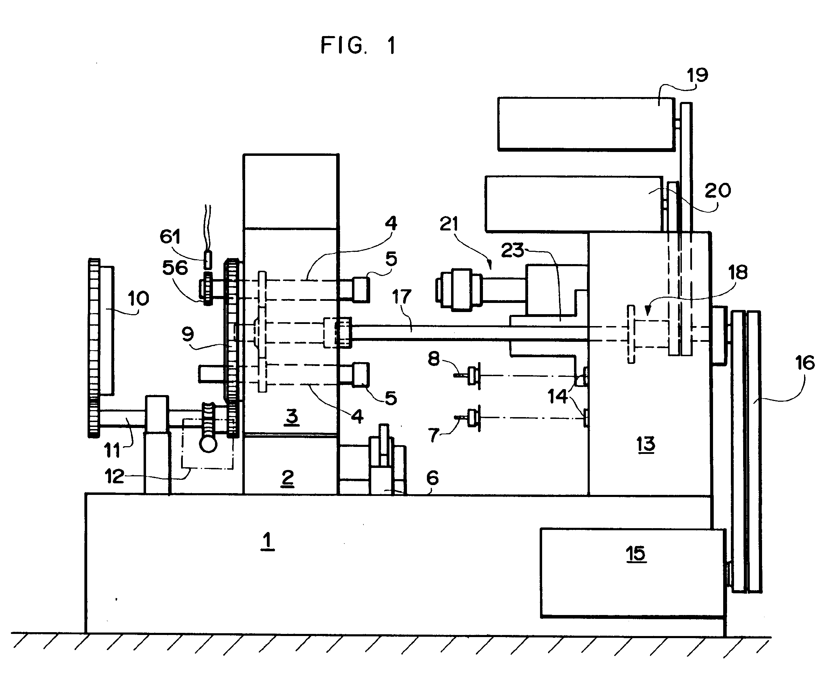

On commencera par décrire succinctement les éléments essentiels de la machine d'usinage représentée à la fig. 1. Cette machine comporte une embase 1, avec un montant 2 qui constitue un support de barillet, dans lequel est supporté rotativement un barillet 3. Ce dernier tourne autour d'un axe horizontal et porte une série de broches 4 d'axes parallèles réparties autour de l'axe central du barillet 3 et comportant chacune une pince 5, destinée à fixer une barre (non représentée) qui est engagée dans la broche 4. Le fonctionnement général de cette machine n'a pas à être décrit ici en détail. On sait que les pinces s'ouvrent périodiquement et que des moyens adéquats font avancer les barres d'une longueur prédéterminée, après quoi des outils, comme par exemple un outil radial monté dans le porte-outil 6, et/ou des outils frontaux, comme le perceur 7 ou le taraudeur 8, effectuent des opérations d'usinage sur l'avant des barres. Celles-ci sont solidarisées par les pinces 5 avec les broches 4 qui tournent sur leurs axes, chacune dans l'une des stations d'usinage prévues. Les organes 9 et 10 sont des couronnes dentées qui, lors de l'indexage du barillet 3, sont entraînées par un arbre 11, à partir d'un moteur d'indexage 12, de sorte que le barillet 3 et le faisceau des barres tenues dans les broches 4 tourne d'un bloc afin que chaque barre atteigne la station d'usinage suivante.

La machine comporte donc, sur l'embase 1, un bâti 13 dans la partie supérieure duquel sont montés des postes de travail 14, répartis de façon à se trouver chacun en face de l'un des postes d'usinage définis par les positions d'arrêt du barillet 3. L'embase 1 porte un moteur principal 15 qui, par l'intermédiaire de courroies 16, entraîne un arbre 17 dont la rotation est communiquée par des engrenages convenables aux broches 4. D'autre part, un système de moyens moteurs rotatifs 18 comportant divers pignons, renvois et accouplements qui ne seront pas décrits ici, permet d'entraîner en rotation, à partir de différents moteurs, par exemple un moteur 19 et un moteur 20 à vitesse réglable, des broches de travail (non représentées) montées dans les postes de travail 14 et entraînant les outils rotatifs tels que 7 et 8.

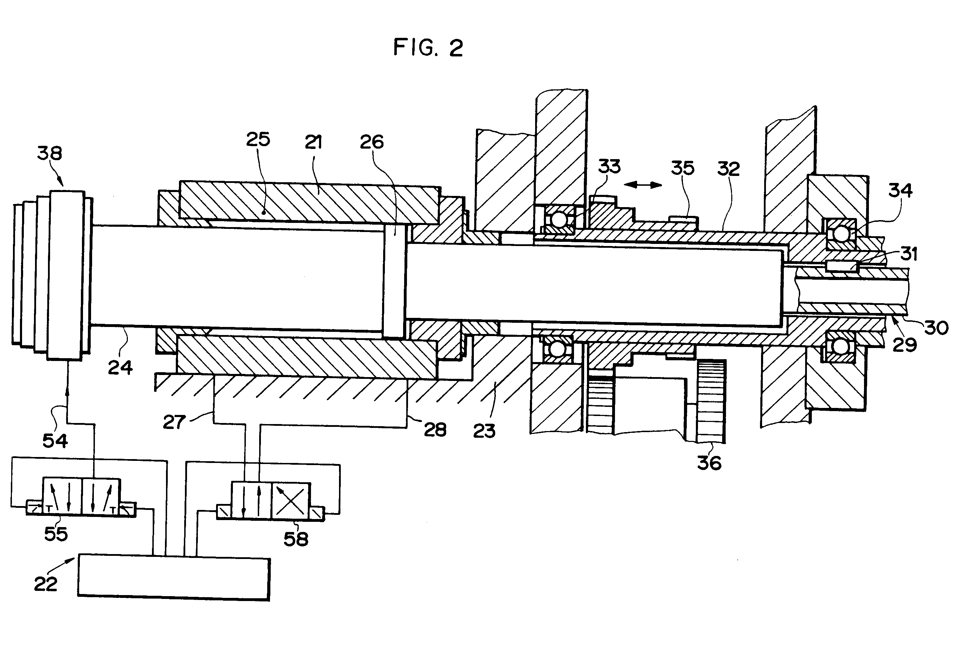

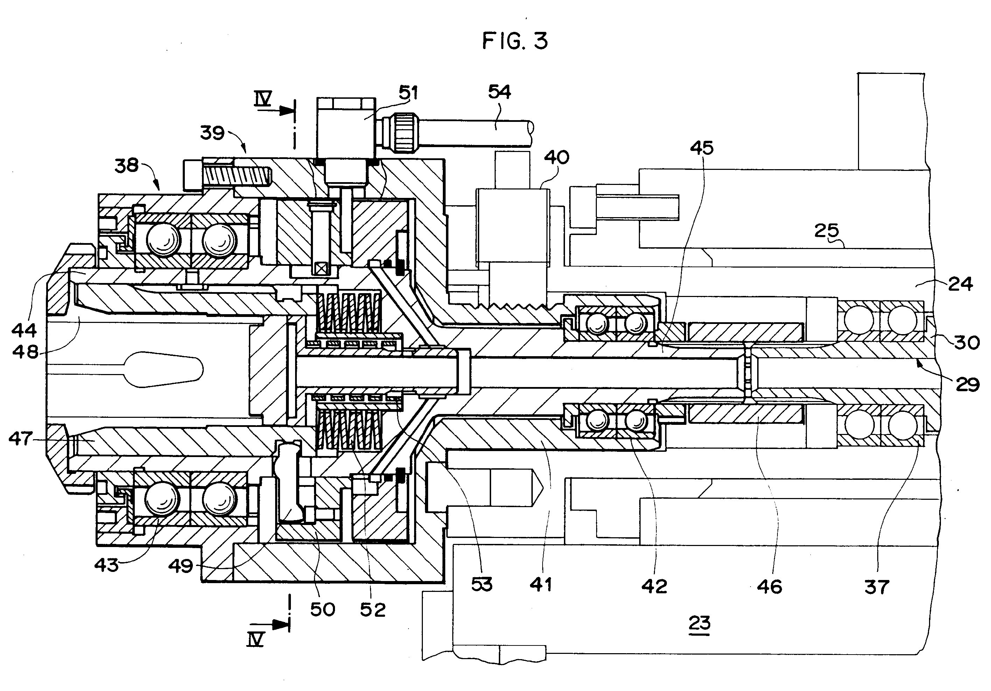

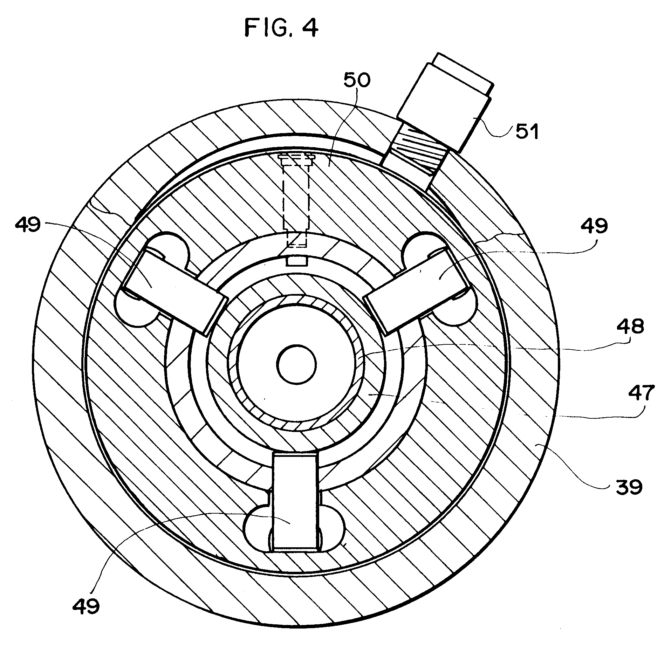

Le dispositif d'entraînement qui va être décrit maintenant utilise l'un des postes de travail 14. Il comporte, d'une part, une unité autonome 21 et, d'autre part, des moyens de commande 22. Ces deux parties du dispositif sont représentées de façon schématique à la fig. 2 et plus en détail aux fig. 3 et 4. L'unité 21 est montée sur un support 23 qui est destiné à être fixé contre le bâti 13 à l'emplacement de l'un des postes de travail 14. A l'intérieur de ce support est monté un manchon coulissant 24. Comme on le voit à la fig. 2, l'unité 21 comporte un cylindre 25 et le manchon coulissant 24 comporte, à peu près au milieu de sa longueur, une collerette 26 qui sera garnie d'un joint d'étanchéité et qui fonctionne en piston. Les deux extrémités du cylindre 25 sont alimentées par des conduites 27 et 28, de sorte qu'un mouvement axial vers la gauche ou vers la droite à la fig. 2 peut être commandé et provoque le déplacement du manchon 24. A l'intérieur de ce manchon est disposé un ensemble rotatif 29 qui est supporté à l'intérieur du manchon 24 par des paliers et qui comporte notamment un arbre creux cannelé 30, dont on voit l'extrémité arrière à la fig. 2. Cette extrémité cannelée de l'arbre creux 30 est accouplée par une ou plusieurs clavettes 31 à un moyeu 32 dont la partie centrale entoure l'extrémité arrière du manchon 24 et qui est supporté par des paliers 33 et 34 dans le bâti 13. Sur ce moyeu est monté un pignon multiple 35 qui peut être déplacé axialement, de façon connue en soi, et coopérer avec un élément d'engrenage 36 pour entraîner l'ensemble rotatif 29 à des vitesses variables tout en permettant, à l'arbre creux 30 et aux éléments qui en sont solidaires, de se déplacer axialement sous l'influence du déplacement du piston 26 commandé par le dispositif hydraulique.

A la fig. 3, on voit à nouveau une partie du support 23, le cylindre 25 et l'extrémité avant du manchon 24. On voit également l'extrémité avant de l'arbre creux 30 qui est supportée à l'intérieur du manchon 24 par un palier 37.

Le manchon 24 porte à son extrémité avant une pince, désignée de façon générale par 38, et dont les détails sont visibles aux fig. 3 et 4. Cette pince comporte un corps de pince 39, de forme générale cylindrique, ayant un prolongement arrière 41 relié par un moyen de verrouillage 40 à l'extrémité du manchon 24. Le prolongement arrière 41 porte un palier arrière 42 coaxial à un palier avant 43 de plus grand diamètre. Ces deux paliers supportent la partie rotative de la pince, qui comporte elle-même une broche 44 se terminant à son extrémité arrière en forme de fusée 45 avec des cannelures permettant de raccorder cette broche à l'arbre creux 30 par l'intermédiaire d'un manchon d'accouplement 46. La broche 44 guide, dans un logement qu'elle comporte à son extrémité avant, une douille de serrage mobile axialement 47 et un élément de pince 48 de construction classique. La douille 47 coopère avec trois leviers 49 disposés radialement et avec un piston 50 mobile axialement, sous l'effet d'une pression d'air injectée par le raccord d'entrée 51. En se déplaçant axialement vers l'avant, le piston 50 sollicite les leviers 49 qui s'appuient contre un épaulement de la broche 44 et font reculer la douille de serrage 47 vers l'arrière contre l'action d'un ressort de serrage 52. De ce fait, l'élément de pince 48, qui est retenu en place par un ressort secondaire 53 est libéré et peut s'ouvrir alors qu'il est maintenu fermé quand la douille de serrage 47 est sollicitée vers l'avant par le ressort 52 en l'absence de pression d'air dans la chambre ménagée entre le piston 50 et le fond du cylindre formé à l'intérieur du corps de pince 41.

La pression d'air parvient au raccord 51 par une tubulure 54, contrôlée par une électrovanne 55 (fig. 2), qui travaille en coopération avec une électrovanne 58 alimentant de façon directe ou inverse les tubulures 27 et 28 qui admettent la pression d'huile dans le cylindre 25. Ainsi, le dispositif de commande 22, agissant sur les électrovannes 55 et 58 permet de commander des déplacements contrôlés dans le sens axial du manchon 24 ainsi que l'ouverture et la fermeture de la pince 38. Le dispositif de commande 22 sera également connecté à celui des moteurs 19 ou 20 qui sera utilisé pour entraîner en rotation l'arbre 30 par l'intermédiaire du pignon 35. Cette unité électronique sera connectée également à des détecteurs dont l'un par exemple, désigné par 61, est représenté à la fig. 1. Il s'agit d'un détecteur destiné à la prise de référence angulaire de la broche 4 située en face du poste de travail équipé de l'unité autonome 21. Le détecteur 61 est, par exemple, un détecteur de proximité coopérant avec un plot 56 fixé sur la broche 4. Il émet un signal lorsque cette broche présente une orientation telle que le plot 56 est en coïncidence avec lui. Dans le cas par exemple où la barre, soutenue par la broche 4, est une barre profilée, ce détecteur permet d'assurer le blocage de la broche 4 dans une orientation prédéterminée du profil de la barre. Une fois que cette manoeuvre aura été effectuée, l'unité de commande 22 pourra, par exemple, commander une manoeuvre de la pince 38, de façon que cette pince vienne se serrer sur l'extrémité de la barre en face de laquelle elle est située. On remarque que cette opération peut être effectuée sans apporter aucune modification à la construction de la pince tenant la barre, ni à la disposition de la broche correspondante, ni à la disposition du barillet 3. Cette opération étant effectuée, l'unité de commande 22 est à même de commander divers programmes de travail, non seulement sur les éléments de l'unité autonome 21 ou sur le moteur d'entraînement du poste de travail correspondant, mais également sur d'autres organes de la machine d'usinage.

Pour fixer les idées, on indiquera ci-après, à titre d'exemple et en résumé, un programme en plusieurs étapes qui comporte lui-même diverses variantes en ce qui concerne une partie de ces étapes.

## Description du cycle

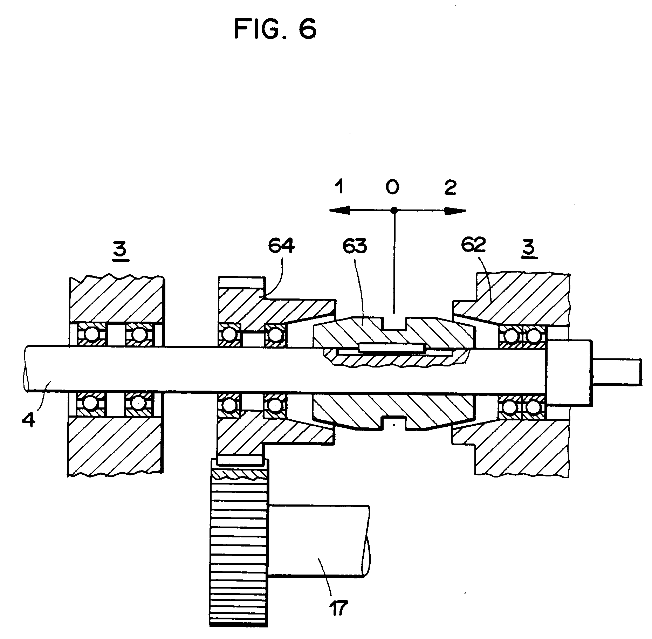

1. (Opération préalable) Indexage du barillet. Pendant ce mouvement, la broche 4 est freinée et passe de la vitesse N à la vitesse zéro.
Verrouillage du barillet. Blocage de la broche une fois arrêtée. Cette opération peut être réalisée en disposant (voir fig. 6) à l'intérieur du barillet 3, coaxialement à la broche 4, un cône de blocage 62 avec lequel coopère un baladeur d'embrayage 63 qui coulisse sur la broche et peut être amené, à partir d'une position intermédiaire (0) d'une part, (1) dans une position d'embrayage avec un pignon 64 entraîné en rotation par l'arbre 17 ou, d'autre part, (2) dans une position de blocage en contact avec le cône de blocage 62. Le manchon baladeur 63 sera claveté sur l'arbre de la broche 4.
2. Commande de la broche 38. Serrage de la pince 39 sur l'extrémité de la barre ou sur la pièce.
3. Libération du frein 63 de la broche
4. Commande d'indexage de la barre ou de la pièce et arrêt de la rotation au moyen du moteur d'entraînement 20 ou 19 lors du signal fourni par le détecteur 61.
5. Commande d'une opération d'usinage. (Perçage, fraisage dans le sens radial, tronçonnage, etc.).
6.
   – Rotation de la broche 38 d'un angle prédéterminé en vue d'un deuxième usinage radial ou
   – mise en place d'un organe d'usinage auxiliaire, puis exécution d'une opération au moyen de l'organe d'usinage auxiliaire, la broche 38 restant fixe ou
   – travail en axe C, permettant d'usiner, par exemple par fraisage, une entrée hélicoïdale, l'unité de commande commandant alors simultanément un mouvement de rotation de la broche 38 et un mouvement de déplacement dans le sens axial de l'outil d'usinage, la barre ou la pièce étant toujours serrée dans la pince 39.
7. Retour de la broche 38 dans l'orientation de départ.
8. Desserrage de la pince 39 et recul de la broche 38.
9. Indexage du barillet 3. Pendant ce mouvement, la broche sera à nouveau entraînée, de façon à passer de la vitesse zéro à la vitesse N. La nouvelle broche qui vient en place dans la station d'usinage où se trouve l'unité 21 subit l'opération décrite sous 1., de sorte que le cycle est complet.

Ainsi donc, comme on le voit sur la base de cet exemple, l'unité de commande 22 peut comporter les entrées et les sorties nécessaires pour commander toutes ces diverses opérations.

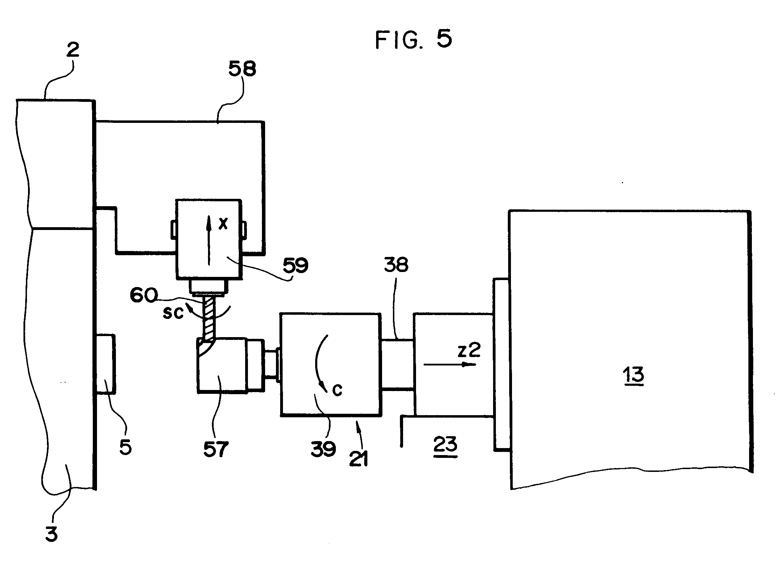

A la fig. 5, on voit encore, d'une façon schématique, la disposition correspondant à l'exécution d'un usinage formant une entrée hélicoïdale sur la surface latérale d'une pièce cylindrique. La pièce est désignée à la fig. 5 par 57. On voit au dessin le corps 39 de la pince et la broche 38 ainsi que le support 23 qui est fixé au bâti 13. A la partie supérieure du montant 2, qui assure le pivotement du barillet 3, est monté un support d'outil 58, qui porte un outil de fraisage 59 supporté par une coulisse de façon à se déplacer dans le sens radial par rapport à l'axe de la broche 38. La pince 5 de la broche correspondante du barillet 3 est également représentée à la fig. 5. On constate qu'une opération de tronçonnage a été effectuée sur l'extrémité de la barre pincée dans la pince 5, de sorte que la pièce 57 a été écartée de la pince 5 par un déplacement axial de la broche 38. Le mouvement radial de la fraise 60 est un mouvement dont la commande répond au critère X, alors que la rotation de la broche 38 est un mouvement qui répond au critère dit axe C. Le déplacement axial de la broche 38 répond au critère appelé Z2. Ainsi, l'exécution d'une rainure hélicoïdale dans la surface latérale cylindrique de la pièce 57 est une opération qui nécessite une commande XCZ2. Une telle commande est facilement susceptible d'être programmée lorsque la machine d'usinage est équipée d'une commande numérique. Ceci implique naturellement que le moteur auxiliaire utilisé, pour entraîner l'arbre 30, doit pouvoir être piloté en axe C par le dispositif de commande numérique de la machine.

En ce qui concerne la fig. 5, on peut encore indiquer que dans une autre variante, le programme d'exécution des opérations pourrait comporter, dans le cas où la pièce 57 ne serait pas séparée de la barre, une ouverture de la pince 5 afin de permettre un déplacement axial de l'ensemble de la barre lors de l'opération d'usinage au moyen de la fraise 60, puis le retour de la barre dans sa position normale et le resserrage de la pince 5. Ensuite, la pince 39 serait ouverte et la broche 38 reculerait afin de permettre l'indexage du barillet et la répétition de l'opération sur la barre suivante. Dans le cas où la pièce 57 aurait été tronçonnée ou serait une pièce séparée, elle serait évidemment projetée dans un réceptacle à la fin de l'opération, c'est-à-dire à l'ouverture de la pince 39.

Une autre variante serait que le mouvement Z2 ne serait pas effectué par l'unité d'usinage 21 mais par un déplacement axial de l'outil de fraisage 59.

**Revendications**

1. Dispositif d'entraînement et de commande d'une machine d'usinage multibroches comprenant elle-même, dans un bâti (1, 2, 13) un barillet (3) indexable autour d'un axe et équipé d'une série de broches (4) réparties autour du dit axe et pourvues de moyens de rotation (63, 64, 17), un ensemble de postes de travail (14) disposés en regard du barillet de manière à effectuer des opérations sur des barres ou pièces portées par les broches, et des moyens moteurs (18, 35, 36) actionnant les postes de travail, caractérisé en ce que le dit dispositif comprend d'une part dans un des dits postes de travail (14) une unité auxiliaire (21) constituée d'une pince (38) à ouverture et fermeture commandées et de moyens d'entraînement (24-35) de la pince, raccordés aux dits moyens moteurs (18, 36), et d'autre part des moyens de commande programmables (22, 55, 58) connectés à la broche (4) située en regard de la dite unité auxiliaire (21) et à l'unité auxiliaire (21), et capables de commander les dits moyens de rotation (63, 64, 17) de la broche située en regard de l'unité auxiliaire et la pince (38), et d'effectuer ainsi au moins une opération d'indexage de la barre ou pièce portée par la dite broche (4), cette opération étant effectuée au moyen de la dite pince (38).

2. Dispositif selon la revendication 1, caractérisé en ce que l'unité (21) comporte un élément d'arbre (24) portant la dite pince, en ce que les moyens d'entraînement comportent une commande hydraulique ou hydropneumatique (54, 50, 49) d'ouverture et de fermeture de la pince (38) et un entraînement axial contrôlé (25, 26) de l'élément d'arbre (24), et en ce que les moyens de commande (22, 55, 58) sont agencés pour commander des manoeuvres répétitives d'ouverture, de fermeture et de déplacement axial de la pince.

3. Dispositif selon la revendication 2, caractérisé en ce que les moyens de commande comportent une sortie destinée à être connectée à un dit moyen moteur rotatif (18, 36) de manière à commander et contrôler sa rotation quand il est raccordé à l'unité auxiliaire.

4. Dispositif selon l'une des revendications 1 à 3, caractérisé en ce que les moyens de commande comportent une entrée destinée à être connectée à un détecteur (61) monté sur le barillet (3) et capable d'émettre un signal pour au moins une orientation prédéterminée de la broche (4) qui se trouve en regard de l'unité auxiliaire (21).

5. Dispositif selon l'une quelconque des revendications 1 à 4, caractérisé en ce que les moyens de commande comportent une sortie destinée à être connectée à une commande d'accouplement de broche (63, 64) associée dans le barillet, à la dite broche se trouvant en regard de l'unité auxiliaire (21).

6. Dispositif selon l'une quelconque des revendications 1 à 5, caractérisé en ce que les moyens de commande sont agencés de façon à pouvoir commander une prise de référence angulaire de la barre ou de la pièce fixée dans la broche se trouvant en regard de l'unité auxiliaire (21), puis l'une ou l'autre des opérations suivantes:
   – une opération d'usinage;
   – un indexage d'un angle déterminé en vue d'un deuxième usinage;
   – une opération d'usinage et une opération de rotation de la barre ou de la pièce, ces deux opérations étant combinées et constituant un travail en axe C.

7. Dispositif selon l'une quelconque des revendications précédentes, caractérisé en ce que la pince (38) et les moyens d'entraînement (24-35) sont assemblés en un appareil auxiliaire comportant un arbre (32) et un support (23), cet appareil étant conçu de manière à se fixer au bâti à l'emplacement de l'un quelconque des postes de travail (14).

**Patentansprüche**

1. Antriebs- und Steuerungsvorrichtung für eine Mehrspindelbearbeitungsmaschine, bestehend aus einem Maschinenrahmen (1, 2, 13) und einem um eine Achse schaltbaren Gehäuse (3), welches mit einer Anzahl um die besagte Achse verteilt angeordneten Spindeln (4) ausgestattet ist, die mit Rotationsmitteln (63, 64, 17) versehen sind, aus einer Gruppe von Bearbeitungsstellen (14), die im Vergleich zum Gehäuse derart angeordnet sind, dass Bearbeitungen von Stäben oder Stücken, welche durch die Spindeln gehalten sind, ausführbar sind, und aus Antriebsmitteln (18, 35, 36), welche die Bearbeitungsstellen antreiben, dadurch gekennzeichnet, dass die besagte Vorrichtung einerseits in einer der besagten Bearbeitungsstellen (14) eine Hilfseinheit (21) aufweist, bestehend aus einer gesteuert zu öffnenden und schliessenden Klemme (38) und aus Antriebsmitteln (24 - 35) für die Klemme, verbunden mit den besagten Antriebsmitteln (18, 36), und andererseits programmierbare Steuerungsmittel (22, 55, 58) aufweist, die mit der Spindel (4), welche der Hilfseinrichtung (21) gegenüberliegend angeordnet ist, und der Hilfseinrichtung (21) verbunden sind, und die fähig sind, die besagten Rotationsmittel (63, 64, 17) der Spindel, die der Hilfseinrichtung gegenüberliegend ist, und die Klemme (38) zu steuern und die mindestens einen Indexiervorgang der Stange oder des Stückes ausführt, welche durch die besagte Spindel (4) getragen sind, wobei dieser Vorgang mittels der besagten Klemme (38) ausführbar ist.

2. Vorrichtung nach Anspruch 1, dadurch gekennzeichnet, dass die Einheit (21) ein Achselement (24) enthält, welches die besagte Klemme trägt, wobei die Antriebsmittel ein hydraulisches oder hydropneumatisches Stellglied (54, 50, 49) zur Oeffnung und Schliessung der Klemme (38) und einen gesteuerten Axialantrieb (25, 26) des Achselements (24) enthalten und dass Steuerungsmittel (22, 55, 58) zur Betätigung der wiederholbaren Vorgänge zur Oeffnung und Schliessung und der Axialverschiebung der Klemme angeordnet sind.

3. Vorrichtung nach Anspruch 2, dadurch gekennzeichnet, dass die Steuerungsmittel einen Ausgang enthalten, der zur Verbindung mit dem besagten rotativen Antriebsmittel (18, 36) bestimmt ist, damit die Drehung steuerbar und kontrollierbar ist, wenn es mit der Hilfseinheit verbunden ist.

4. Vorrichtung nach einem der Ansprüche 1 bis 3, dadurch gekennzeichnet, dass die Steuerungsmittel einen Eingang enthalten, der zur Verbindung mit einem Detektor (61) bestimmt ist, welcher auf dem Gehäuse (3) befestigt ist, und der fähig ist, ein Signal abzusenden für mindestens eine vorbestimmte Stellung der Spindel (4), die sich gegenüberliegend zur Hilfseinheit (21) befindet.

5. Vorrichtung nach einem der Ansprüche 1 bis 4, dadurch gekennzeichnet, dass die Steuerungsmittel einen Ausgang enthalten, der zur Verbindung mit einer Spindel-Kupplungssteuerung (63, 64), angeordnet im Gehäuse, bestimmt ist, wobei sich die besagte Spindel gegenüberliegend zur Hilfseinheit (21) befindet.

6. Vorrichtung nach einem der Ansprüche 1 bis 5, dadurch gekennzeichnet, dass die Steuermittel so ausgeführt sind, dass eine winklige Referenzaufnahme der Stange oder eines Stückes, gehalten in der Spindel, welche sich gegenüberliegend zur Hilfseinheit befindet, ausführbar ist und dann der eine oder andere der nachfolgenden Vorgänge steuerbar ist:
   – ein Bearbeitungsvorgang;
   – eine Indexierung eines vorbestimmten Winkels im Hinblick auf eine zweite Bearbeitung;
   – ein Bearbeitungsvorgang und ein Rotationsvorgang der Stange oder des Stückes, wobei diese beiden Vorgänge kombiniert sind und einen Teil einer Arbeit in der C-Achse bilden.

7. Vorrichtung nach einem der vorhergehenden Ansprüche, dadurch gekennzeichnet, dass die Klemme (38) und die Antriebsmittel (24 - 35) in einem Hilfsapparat zusammengelegt sind, eine Achse (32) und einen Träger (23) enthaltend, wobei dieser Apparat so aufgebaut ist, dass er am Maschinenrahmen am Ort irgendeiner der Bearbeitungsstellen (14) befestigbar ist.

## Claims

1. Driving and control device for a multispindle processing machine itself comprising within a frame (1, 2, 13) a barrel (3) indexable about an axis and fitted with a plurality of spindles (4) distributed about said axis and provided with rotary means (63, 64, 17), a plurality of work stations (14) disposed opposite the barrel so as to carry out operations on the bars or workpieces borne by the spindles, and drive means (18, 35, 36) actuating the work stations, characterized in that the said device comprises on the one hand in one of the said work stations (14) an auxiliary unit (21) constituting a chuck (38) with controlled opening and closing and means (24-35) for driving the chuck, connected to said drive means (18, 36), and on the other hand programmable control means (22, 55, 58) connected to the spindle (4) situated opposite the said auxiliary unit (21), and to the auxiliary unit (21), and capable of controlling said means (63, 64, 17) for rotating the spindle situated opposite the auxiliary unit and the chuck (38), and thus to carry out at least one indexing operation on the bar or workpiece borne by said spindle (4), this operation being carried out by means of said chuck (38).

2. The device of claim 1, characterized in that the unit (21) comprises a shaft element (24) bearing said chuck, in that the drive means comprise a hydraulic or hydropneumatic control (54, 50, 49) for opening and closing the chuck (38) and an axial drive monitored (25, 26) by the shaft element (24), and in that the control means (22, 55, 58) are arranged to control repetitive opening, closing, and axial displacement operations of said chuck.

3. The device of claim 2, characterized in that the control means comprise an output intended to be connected to a said rotary driving means (18, 36) so as to control and monitor rotation thereof when it is connected to the auxiliary unit.

4. The device of one of claims 1 to 3, characterized in that the control means comprise an input intended to be connected to a detector (61) mounted on the barrel (3) and capable of emitting a signal for at least one predetermined orientation of the spindle (4) which is opposite the auxiliary unit (21).

5. The device of any one of claims 1 to 4, characterized in that the control means comprise an output intended to be connected to a spindle coupling unit (63, 64) associated in the barrel to said spindle located opposite the auxiliary unit (21).

6. The device of any one of claims 1 to 5, characterized in that the control means are arranged so as to be able to control a pick-up of angular reference of the bar or the workpiece fixed in the spindle located opposite the auxiliary unit (21), then one or other of the following operations:
   – a machining operation;
   – indexing through a certain angle with a view to a second machining operation;
   – a machining operation and an operation of rotation of said bar or of said workpiece, these two operations being combined and constituting a C-axis operation.

7. The device of any one of the preceding claims, characterized in that the chuck (38) and the drive means (24-35) are mounted in an auxiliary apparatus comprising a shaft (32) and a support (23), this apparatus being designed to be fixed to the frame at the location of any one of the work stations (14).

FIG. 1

EP 0 356 389 B1

FIG. 2

FIG. 3

FIG. 4

FIG. 5

EP 0 356 389 B1

# FIG. 6